# EUROPÄISCHE PATENTSCHRIFT

(11) **EP 3 375 215 B1**
(45) Veröffentlichungstag und Bekanntmachung des Hinweises auf die Patenterteilung: **30.09.2020**
(21) Anmeldenummer: 16793834.9
(22) Anmeldetag: 07.11.2016
(51) Int. Cl.: H04W 12/04, H04W 84/12, H04W 4/00, H04W 12/00, H04W 4/70

(54) **VERFAHREN ZUM ÜBERTRAGEN VON MASCHINENZUGANGSDATEN AN EINEN DRAHTLOSEN MESSSENSOR DER MASCHINE SOWIE MESSSENSOR UND MASCHINE DAFÜR**
METHOD FOR TRANSMITTING MACHINE ACCESS DATA TO A WIRELESS MEASUREMENT SENSOR OF THE MACHINE, AND MEASUREMENT SENSOR AND MACHINE THEREFOR
PROCÉDÉ POUR TRANSMETTRE DES DONNÉES D'ACCÈS MACHINE À UN CAPTEUR DE MESURE SANS FIL DE LA MACHINE ET CAPTEUR DE MESURE ET MACHINE À CET EFFET

(30) Priorität: 13.11.2015 DE 102015222395
(43) Veröffentlichungstag der Anmeldung: 19.09.2018
(73) Patentinhaber: TRUMPF Werkzeugmaschinen GmbH + Co. KG, 71254 Ditzingen (DE); TRUMPF Schweiz AG, 7214 Grüsch (CH)
(72) Erfinder: SCHAERER, Andrea, 7214 Grüsch (CH); BOCK, Hans-Peter, 74321 Tamm (DE); GÖRG, Christian, 71696 Möglingen (DE)
(74) Vertreter: Kohler Schmid Möbus Patentanwälte
(86) Internationale Anmeldenummer: PCT/EP2016/076793
(87) Internationale Veröffentlichungsnummer: WO 2017/080941

(56) Entgegenhaltungen:
- DE-A1- 19 933 812
- DE-A1-102009 009 188
- DE-A1-102011 083 817
- US-A1- 2014 028 818
- US-A1- 2014 056 171

## Beschreibung

Die Erfindung betrifft ein Verfahren zum Übertragen von Daten zu einer Kommunikationsschnittstelle einer Maschine an einen an der Maschine befestigten drahtlosen Messsensor gemäß dem Oberbegriff von Anspruch 1, sowie eine Maschine zum Durchführen des Verfahrens.

Ein derartiges Verfahren ist beispielsweise durch die DE 199 33 812 A1 bekannt geworden.

Für die Nivellierung von Werkzeugmaschinen sollen Sensoren eingesetzt werden, die an vorbestimmten Befestigungspositionen einer Werkzeugmaschine angebracht werden und nur drahtlos kommunizieren können. Anders als bei verdrahteten Sensoren ist bei drahtlosen Sensoren deren Position nicht automatisch durch den Anschluss eines bestimmten Kabels an einen bestimmten Steuerungseingang bestimmt. Die drahtlosen Sensoren besitzen üblicherweise kein Bedienfeld und müssen daher händisch, insbesondere mit einem zusätzlichen Programmiergerät, auf das richtige drahtlose Datenübertragungssystem der Werkzeugmaschine konfiguriert werden. Die Erstinbetriebnahme und der Austausch von Sensoren bedeuten an der Werkzeugmaschine einen hohen Konfigurationsaufwand und eine hohe Fehleranfälligkeit (Konfiguration auf falsche Werkzeugmaschinen, falsches Wifi, falscher Bluetooth Host, ...). Insbesondere müssen die Zugangsdaten zum Datenübertragungssystem manuell am drahtlosen Sensor eingegeben werden.

Die eingangs genannte DE 199 33 812 A1 beschreibt ein Verfahren zum Konfigurieren eines Sensors, wobei der Sensor im Sensormodus detektierte Sensordaten fortlaufend auf Übereinstimmung mit charakteristischen, gespeicherten, vorgegebenen Sensordaten vergleicht. Der Sensor schaltet vom Sensormodus in einen Konfigurationsmodus um, sobald eine Datenübereinstimmung festgestellt wird. Die den charakteristischen Sensordaten nachfolgenden Daten werden zur Konfiguration des Sensors verwendet. Nach Erhalt dieser Konfigurationsdaten wird wieder in den Sensormodus gewechselt. Der Sensor weist einen Vergleicher auf, der von einem Aufnehmer detektierte Sensordaten fortlaufend auf Übereinstimmung mit den vorgegebenen Sensordaten vergleicht. Eine Auswerteelektronik ist zur Konfiguration vorgesehen, welche der Vergleicher zeitweise mit empfangenen Sensordaten beaufschlagt, sobald eine Datenübereinstimmung auftritt. Das Konfigurationsverfahren ist ein zweistufiger Übertragungsprozess (zuerst Signale zum Umschalten in den Konfigurationsmodus und dann Signale zum Konfigurieren), wobei sich die einzelnen Sensoren mit Auftreten der vorgegebenen und abgespeicherten Sensordaten selbsttätig konfigurieren, z.B. beim selbsttätigen erstmaligen Einrichten der Sensoren.

Der vorliegenden Erfindung liegt daher die Aufgabe zugrunde, bei einem Verfahren der eingangs genannten Art den Aufwand und die Fehleranfälligkeit bei der Datenübertragung zu reduzieren sowie hierfür eine geeignete Maschine anzugeben.

Diese Aufgabe wird erfindungsgemäß durch ein Verfahren mit den Merkmalen von Anspruch 1 gelöst.

Erfindungsgemäß wird der drahtlose Sensor an der Maschine fest montiert und dann auf der Maschine ein - z.B. automatisch erzeugtes - Bewegungsprogramm der Maschinenkomponente gestartet, das die Maschine in Schwingung versetzt. Im Falle einer NC-Werkzeugmaschine wird als Bewegungsprogramm automatisch ein NC-Programm erzeugt, mit dem die Maschinenkomponente entlang der Maschinenachsen definiert bewegt wird. In dieses Bewegungsprogramm sind die Zugangsdaten zu einer maschinenseitigen Kommunikationsschnittstelle (Wifi ESSID+Key, BT Host MAC, ...) aufmoduliert. Der drahtlose Sensor misst die durch Verfahren der Maschinenachsen in die Maschine eingebrachten Schwingungen und dekodiert die Zugangsdaten. Mit diesen Zugangsdaten kann sich der Sensor (über Wifi ESSID+Key, BT Host MAC, ...) anschließend drahtlos zur maschinenseitigen Kommunikationsschnittstelle verbinden. Der manuelle Aufwand der Erstkonfiguration der Sensoren beschränkt sich auf den Start des auf der Maschine automatisch generierten Bewegungsprogramms. Fehlkonfigurationen von Sensoren sind mit diesem automatischen Verfahren ausgeschlossen. Vorteilhaft können die decodierten bzw. ausgewerteten Messsignale einen Code, insbesondere einen Morse-Code, bilden.

Neben der bestimmungsgemäßen Ansteuerung der Maschinenkomponente, also z.B. im Fall einer Werkzeugmaschine neben der zur Werkstückbearbeitung erforderlichen Ansteuerung eines Werkzeugs, Bearbeitungskopfes, Werkstücktischs, Aggregats etc., wird erfindungsgemäß die Ansteuerung der Maschinenkomponente auch dazu genutzt, Informationen von der Maschine an einen Sensor zu übertragen. Die in der Ansteuerung der Maschinenkomponente enthaltenen Informationen werden als Zugangsdaten vom Sensor selbst ausgewertet. Der manuelle Aufwand bei der Erstkonfiguration oder beim Austausch von Sensoren beschränkt sich auf den Start eines Ansteuerungsprogramms auf der Maschine. Fehlkonfigurationen von Sensoren sind mit diesem automatischen Verfahren ausgeschlossen. Die Datenübertragung kann beispielsweise durch modulierte Ansteuerung der Maschinenkomponente erfolgen.

Neben der bestimmungsgemäßen Bewegung der Maschinenkomponente, also z.B. im Fall einer Werkzeugmaschine neben der zur Werkstückbearbeitung erforderlichen Bewegung eines Werkzeugs, Bearbeitungskopfes oder Werkstücktischs, wird erfindungsgemäß die Bewegung der Maschinenkomponente auch dazu genutzt, Informationen von der Maschine an einen Sensor zu übertragen. Die in der Bewegung der Maschinenkomponente enthaltenen Informationen werden als Konfigurierungsinformationen entweder vom Sensor selbst oder von der Maschine ausgewertet. Der manuelle Aufwand bei der Erstkonfiguration oder beim Austausch von Sensoren beschränkt sich auf den Start eines Bewegungsprogramms auf der Maschine. Fehlkonfigurationen von Sensoren sind mit diesem automatischen Verfahren ausgeschlossen.

Vorzugsweise wird die Maschinenkomponente nach einem vorbestimmten räumlichen und/oder zeitlichen Bewegungsmuster bewegt. Die Bewegung der Maschinenkomponente kann mehrere, insbesondere gleichartige, Bewegungsabschnitte oder Bewegungsabschnitte mit unterschiedlichen Geschwindigkeiten, mit unterschiedlichen Beschleunigungen und/oder mit unterschiedlich langen Pausen aufweisen.

In einer besonders bevorzugten Verfahrensvariante wird - z.B. bei der Erstinbetriebnahme eines drahtlosen Sensors - anhand der ausgewerteten Messsignale des Sensors aus mehreren möglichen Befestigungspositionen die tatsächliche Befestigungsposition des Sensors an der Maschine vom Sensor selbst (Selbstidentifikation) oder von der Maschine (Maschinenidentifikation) ermittelt. Die Maschine weist beispielsweise ein drahtloses Datenübertragungssystem (Wifi o.ä.) auf, über das sie auch mit Sensoren, deren Bedeutung die Maschine nicht kennt, bidirektional Daten austauschen kann.

Bei der Selbstidentifikation ermittelt der Sensor aus seinen Messsignalen und aus empfangenen Maschinenkomponentenpositionsdaten seine tatsächliche Befestigungsposition an der Maschine. In dem Sensor sind Referenz-Messwerte oder Schwellwerte hinterlegt, die zur Ermittlung der tatsächlichen Befestigungsposition des Sensors mit den Messsignalen des Sensors verglichen werden. Im Fall von Schwingungssensoren wird die Maschinenkomponente bevorzugt so verfahren, dass an allen Befestigungspositionen unterschiedliche Schwingungen erzeugt werden, d.h. die Referenz-Messwerte unterscheiden sich für alle Befestigungspositionen. Alternativ kann die Maschinenkomponente in Richtung aller möglichen Befestigungspositionen des Sensors verfahren werden, um dort Schwingungen zu erzeugen, und dann wird einem Sensor diejenige Befestigungsposition zugeordnet, an der im Sensor der stärkste Messwert gemessen oder nur dort ein vorbestimmter Schwellwerten überschritten wurde. Der vorbestimmte Referenz-Messwert ist entweder standardmäßig eingestellt oder zuvor von der Maschine auf die Sensoren heruntergeladen worden.

Bei der Maschinenidentifikation führt die Maschine mit der Maschinenkomponente bestimmte Bewegungen an verschiedenen definierten Achspositionen aus und zeichnet gleichzeitig die Messsignale aller nicht zugeordneten Sensoren auf. Im Anschluss korreliert die Maschine die Messreihe jedes nicht zugeordneten Sensors mit den bekannten Referenz-Messreihen und weist bei Übereinstimmung dem Sensor die entsprechende Befestigungsposition zu. Mit anderen Worten sind in der Maschine für jede der mehreren Befestigungspositionen Referenz-Messwerte hinterlegt, die zur Ermittlung der tatsächlichen Befestigungsposition des Sensors mit den an die Maschine übertragenen Messsignalen des Sensors korreliert werden.

Die Erfindung betrifft schließlich auch eine Maschine mit den Merkmalen von Anspruch 11. Im Rahmen der Erfindung ist unter einer Maschine allgemein ein Gerät mit bewegten Teilen zu verstehen, also beispielsweise eine Werkzeugmaschine, eine Laserbearbeitungsmaschine, aber auch ein Hochregallager mit bewegten Regalteilen oder eine Anlage mit Transportbändern und ansteuerbaren Aggregaten.

Vorzugsweise sind in einem Datenspeicher des Schwingungsensors Referenz-Messwerte oder Schwellwerte hinterlegt, und die Signalverarbeitungseinheit ist programmiert, durch einen Vergleich der empfangenen Messsignale mit den Referenz-Messwerten bzw. den Schwellwerten aus mehreren möglichen Befestigungspositionen die tatsächliche Befestigungsposition des Schwingungsensors an der Maschine zu ermitteln.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch eine erfindungsgemäße Maschine mit einer verfahrbaren Maschinenkomponente und mit einem drahtlosen Sensor;
- Fign. 2a, 2b: ein über die Zeit aufgetragenes Messsignal des Sensors (Fig. 2a) und daraus gewonnene Daten (Fig. 2b);
- Fig. 3: ein über die Zeit aufgetragenes Messsignal des Sensors samt zugehörigen Referenz-Messwerten; und
- Fig. 4: ein über die Zeit aufgetragenes Messsignal des Sensors samt einem zugehörigen Schwellwert.

In der folgenden Figurenbeschreibung werden für gleiche bzw. funktionsgleiche Bauteile identische Bezugszeichen verwendet.

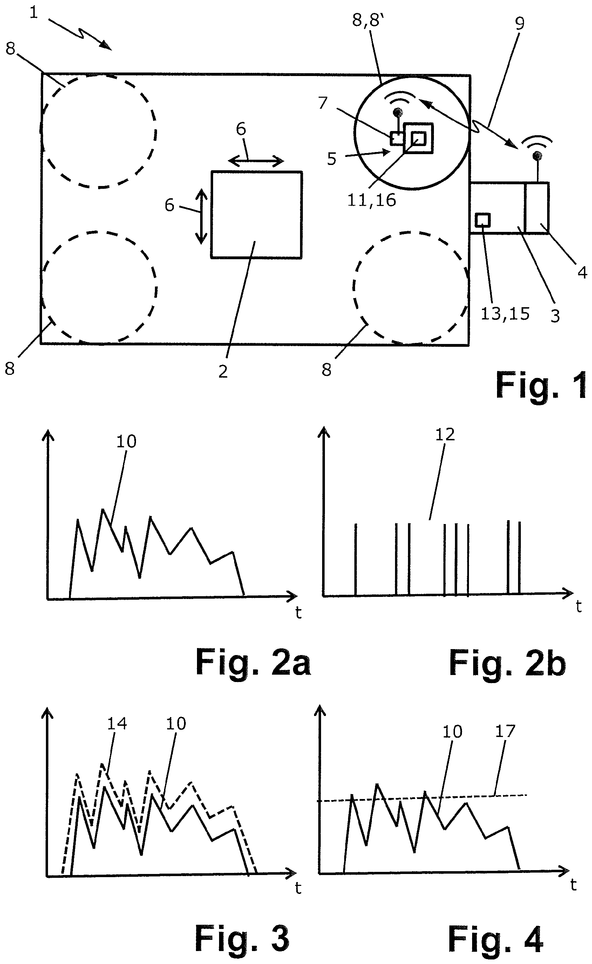

Die in **Fig. 1** gezeigte Maschine **1** weist eine bewegbare Maschinenkomponente **2,** eine Maschinensteuerung **3,** welche die Bewegung der Maschinenkomponente 2 steuert, eine mit der Maschinensteuerung 3 verbundene Kommunikationsschnittstelle **4** eines drahtlosen Datenübertragungssystems (z.B. Wifi) sowie einen drahtlosen Messsensor **5** auf.

Die Maschine 1 kann beispielsweise eine NC-Werkzeugmaschine sein, bei der die bewegbare Maschinenkomponente 2 durch ein in den Maschinenachsen (Doppelpfeile **6**) verfahrbares Werkzeug oder Werkstücktisch gebildet ist, oder aber eine Laserbearbeitungsmaschine, bei der die bewegbare Maschinenkomponente 2 durch einen in den Maschinenachsen verfahrbaren Laserbearbeitungskopf gebildet ist.

Der Sensor 5 ist beispielsweise ein Schwingungssensor, dessen Messsignal von der bewegbaren Maschinenkomponente 2 direkt beeinflusst wird, aber kann auch von jedem anderen Sensortyp sein, dessen Messsignal von der bewegbaren Maschinenkomponente 2 direkt oder indirekt beeinflusst wird. Der Sensor 5 weist eine Kommunikationsschnittstelle **7** zur drahtlosen Kommunikation mit der maschinenseitigen Kommunikationsschnittstelle 4 auf.

Nachdem der Sensor 5 an einer (**8**') von mehreren vorbestimmten Befestigungspositionen **8** der Maschine 1 befestigt worden ist, wird als nächstes eine drahtlose Verbindung **9** zwischen der sensorseitigen und der maschinenseitigen Kommunikationsschnittstelle 4, 7 hergestellt. Dazu wird in der Maschinensteuerung 3 ein automatisch erzeugtes Bewegungsprogramm für die Maschinenkomponente 2 gestartet, das die Maschine 1 in Schwingung versetzt. Im Falle einer NC-Werkzeugmaschine wird als Bewegungsprogramm automatisch ein NC-Programm erzeugt, mit dem die Maschinenkomponente 2 entlang der Maschinenachsen 6 definiert bewegt wird. In dieses Bewegungsprogramm sind die Zugangsdaten zu der maschinenseitigen Kommunikationsschnittstelle 4 aufmoduliert. Die Bewegung der Maschinenkomponente 2 kann nach einem vorbestimmten räumlichen und/oder zeitlichen Bewegungsmuster erfolgen, das mehrere Bewegungsabschnitte mit unterschiedlichen Geschwindigkeiten, mit unterschiedlichen Beschleunigungen und/oder mit unterschiedlich langen Pausen aufweisen kann.

Wie in **Fig. 2a** gezeigt, misst der Sensor 5 die durch das Verfahren der Maschinenkomponente 2 in die Maschine 1 eingebrachten Schwingungen als zeitliches Messsignal **10,** und eine Signalverarbeitungseinheit **11** des Sensors 5 dekodiert aus diesen Messsignalen 10 die in **Fig. 2b** gezeigten Zugangsdaten **12,** die beispielsweise einen Morsecode bilden können. Mit diesen ausgewerteten Zugangsdaten 12 kann sich der Sensor 5 anschließend drahtlos zur maschinenseitigen Kommunikationsschnittstelle 4 verbinden. Der manuelle Aufwand bei dieser Erstkonfiguration von Sensoren 5 beschränkt sich auf den Start des auf der Maschine 1 automatisch generierten Bewegungsprogramms. Fehlkonfigurationen von Sensoren 5 sind mit diesem automatischen Verfahren ausgeschlossen.

Um zu ermitteln, an welcher der mehreren Befestigungspositionen 8 sich der drahtlose Sensor 5 tatsächlich befindet, wird bei der Erstinbetriebnahme auch eine Maschinenidentifikation oder eine Selbstidentifikation des Sensors 5 durchgeführt.

Bei der Maschinenidentifikation führt die Maschine 1 mit der Maschinenkomponente 2 bestimmte Bewegungen an verschiedenen definierten Achspositionen aus. Die Messsignale 10 werden vom Sensor 5 über die drahtlose Verbindung 9 an die Maschinensteuerung 3 übertragen, die einen Datenspeicher **13** aufweist, in dem für jede der mehreren Befestigungspositionen 8 Referenz-Messwerte **14** oder Referenz-Messreihen für die bei der Bewegung der Maschinenkomponente 2 auftretenden Schwingungen hinterlegt sind (**Fig. 3**). Die Maschinensteuerung 3 bzw. eine maschinenseitige Signalverarbeitungseinheit **15** (Fig. 1) korreliert die Messsignale 10 jedes nicht zugeordneten Sensors 5 mit den bekannten Referenz-Messwerten 14 und weist bei Übereinstimmung dem Sensor 5 seine tatsächliche Befestigungsposition 8' zu.

Bei der Selbstidentifikation ermittelt der Sensor 5 aus seinen Messsignalen 10 und aus empfangenen oder vorbestimmten Maschinenkomponentenpositionsdaten seine tatsächliche Befestigungsposition 8' an der Maschine 1. Dazu weist der Sensor 5 einen Datenspeicher **16** auf, in dem ebenfalls Referenz-Messwerte 14 oder, wie in **Fig. 4** gezeigt, ein Schwellwert **17** für die bei der Bewegung der Maschinenkomponente 2 auftretenden Schwingungen hinterlegt sind. Die Maschinenkomponente 2 wird bevorzugt so verfahren, dass an allen Befestigungspositionen 8 unterschiedliche Schwingungen erzeugt werden, d.h., die Referenz-Messwerte 14 unterscheiden sich für alle Befestigungspositionen 8. Alternativ kann die Maschinenkomponente 2 in Richtung aller möglichen Befestigungspositionen 8 des Sensors 5 verfahren werden, um dort Schwingungen zu erzeugen, und dann wird einem Sensor 5 diejenige Befestigungsposition zugeordnet, an der die Messsignale 10 mit den hinterlegten Referenz-Messwerten 14 korrelieren oder an der im Sensor 5 der stärkste Messwert gemessen oder nur dort der Schwellwert 17 überschritten wurde. Die Referenz-Messwerte 14 oder der Schwellwert 17 sind entweder standardmäßig eingestellt oder zuvor von der Maschine 1 auf den Sensor 5 heruntergeladen worden.

Der manuelle Aufwand bei der Korrelation von Sensoren 5 beschränkt sich auf den Start des auf der Maschine 1 automatisch generierten Bewegungsprogramms.

Fehlkorrelationen von Sensoren 5 sind mit diesem automatischen Korrelationsverfahren ausgeschlossen.

Statt durch Bewegen einer bewegbaren Maschinenkomponente 2 kann die Datenübertragung auch durch modulierte Ansteuerung einer (z.B. stationären) Maschinenkomponente erfolgen, also zum Beispiel im Falle eines lichtempfindlichen Sensors 5 durch Modulation des Lichts einer lichtabstrahlenden Maschinenkomponente (Laser) 2 oder im Falle eines Temperatursensors 5 durch Modulation der Temperatur einer wärmeerzeugenden Maschinenkomponente 2.

## Patentansprüche

1. Verfahren zum Übertragen von Daten an einen an der Maschine (1) befestigten drahtlosen Messsensor (5), wobei zum drahtlosen Übertragen von Daten an den Messsensor (5) eine das Messsignal (10) des Messsensors (5) beeinflussende Maschinenkomponente (2) der Maschine (1) in einer informationsspezifischen Weise angesteuert wird und dadurch am Messsensor (5) informationsspezifische Messsignale (10) erzeugt werden, und wobei die Messsignale (10) vom Messsensor (5) selbst als Daten ausgewertet werden,
**dadurch gekennzeichnet,**
**dass** der Messsensor ein Schwingungssensor (5) und die Maschinenkomponente (2) eine bewegbare Maschinenkomponente (2) ist, die relativ zum Schwingungssensor (5) in einer informationsspezifischen Weise bewegt wird, und
**dass** Zugangsdaten zu einer Kommunikationsschnittstelle (4) der Maschine (1) an den Schwingungssensor (5) drahtlos übertragen und die Messsignale (10) vom Schwingungssensor (5) selbst als Zugangsdaten ausgewertet werden.

2. Verfahren nach Anspruch 1, **dadurch gekennzeichnet, dass** sich der Schwingungssensor (5) mit den ermittelten Zugangsdaten (12) mit der Kommunikationsschnittstelle (4) der Maschine (1) drahtlos verbindet.

3. Verfahren nach einem der vorhergehenden Ansprüche, **dadurch gekennzeichnet, dass** die ausgewerteten Messsignale (10) einen Morse-Code bilden.

4. Verfahren nach einem der vorhergehenden Ansprüche, **dadurch gekennzeichnet, dass** die Maschinenkomponente (2) in Richtung jeder der mehreren möglichen Befestigungspositionen (8) bewegt wird.

5. Verfahren nach einem der vorhergehenden Ansprüche, **dadurch gekennzeichnet, dass** die Maschinenkomponente (2) nach einem vorbestimmten räumlichen und/oder zeitlichen Bewegungsmuster bewegt wird.

6. Verfahren nach einem der vorhergehenden Ansprüche, **dadurch gekennzeichnet, dass** die Bewegung der Maschinenkomponente (2) mehrere Bewegungsabschnitte aufweist.

7. Verfahren nach einem der vorhergehenden Ansprüche, **dadurch gekennzeichnet, dass** die Bewegung der Maschinenkomponente (2) Bewegungsabschnitte mit unterschiedlichen Geschwindigkeiten, mit unterschiedlichen Beschleunigungen und/oder mit unterschiedlich langen Pausen aufweist.

8. Verfahren nach einem der vorhergehenden Ansprüche, **dadurch gekennzeichnet, dass** anhand der ausgewerteten Messsignale (10) aus mehreren möglichen Befestigungspositionen (8) die tatsächliche Befestigungsposition (8') des Schwingungssensor (5) an der Maschine (1) vom Schwingungssensor (5) selbst oder von der Maschine (1) ermittelt wird.

9. Verfahren nach Anspruch 8, **dadurch gekennzeichnet, dass** in dem Schwingungssensor (5) Referenz-Messwerte (14) oder Schwellwerte (17) hinterlegt sind und dass zur Ermittlung der tatsächlichen Befestigungsposition (8') des Schwingungssensors (5) die Messsignale (10) des Schwingungssensors (5) mit den hinterlegten Referenz-Messwerten (14) bzw. den Schwellwerten (17) verglichen werden.

10. Verfahren nach Anspruch 8 oder 9, **dadurch gekennzeichnet, dass** in der Maschine (1) für jede der mehreren Befestigungspositionen (8) Referenz-Messwerte (14) hinterlegt sind und dass zur Ermittlung der tatsächlichen Befestigungsposition (8') des Schwingungssensors (5) die an die Maschine (1) übertragenen Messsignale (10) des Schwingungssensors (5) mit den hinterlegten Referenz-Messwerten (14) korreliert werden.

11. Maschine (1) mit einer maschinenseitigen Kommunikationsschnittstelle (4), mit einem drahtlosen Schwingungssensor (5), der eine Kommunikationsschnittstelle (7) zur drahtlosen Kommunikationsverbindung (9) mit der maschinenseitigen Kommunikationsschnittstelle (4) und eine Signalverarbeitungseinheit (11) aufweist, die programmiert ist, aus empfangenen Messsignalen (10) Zugangsdaten zu der maschinenseitigen Kommunikationsschnittstelle (4) zu ermitteln, mit einer das Messsignal (10) des Schwingungssensors (5) beeinflussenden, ansteuerbaren, bewegbaren Maschinenkomponente (2) und mit einer Maschinensteuerung (3), die programmiert ist, zum drahtlosen Übertragen von Zugangsdaten zu der maschinenseitigen Kommunikationsschnittstelle (4) von der Maschine (1) an den Schwingungssensor (5) die Maschinenkomponente (2) relativ zum Schwingungssensor (5) in einer informationsspezifischen Weise zu bewegen.

12. Maschine nach Anspruch 11, **dadurch gekennzeichnet, dass** in einem Datenspeicher (16) des Schwingungssensors (5) Referenz-Messwerte (14) oder Schwellwerte (17) hinterlegt sind und dass die Signalverarbeitungseinheit (11) programmiert ist, durch einen Vergleich der empfangenen Messsignale (10) mit den Referenz-Messwerten (14) bzw. den Schwellwerten (17) aus mehreren möglichen Befestigungspositionen (8) die tatsächliche Befestigungsposition (8') des Schwingungssensors (5) an der Maschine (1) zu ermitteln.

## Claims

1. A method for transmitting data to a wireless measurement sensor (5) which is attached to the machine (1), wherein for wirelessly transmitting data to the measurement sensor (5), a machine component (2) of the machine (1), which influences the measurement signal (10) of the measurement sensor (5), is controlled in an information-specific manner, and information-specific measurement signals (10) are thereby generated at the measurement sensor (5), and wherein the measurement signals (10) are evaluated as data by the measurement sensor (5) itself,
**characterized in that**
the measurement sensor is a vibration sensor (5) and the machine component (2) is a movable machine component (2) which is moved relative to the vibration sensor (5) in an information-specific manner, and
that access data about a communication interface (4) of the machine (1) is wirelessly transmitted to the vibration sensor (5) and the measurement signals (10) are evaluated as access data by the vibration sensor (5) itself.

2. The method as claimed in claim 1, **characterized in that** the vibration sensor (5) wirelessly connects to the communication interface (4) of the machine (1) via the determined access data (12).

3. The method as claimed in one of the preceding claims, **characterized in that** the evaluated measurement signals (10) form a Morse code.

4. The method as claimed in one of the preceding claims, **characterized in that** the machine component (2) is moved in the direction of any of the multiple possible attachment positions (8).

5. The method as claimed in one of the preceding claims, **characterized in that** the machine component (2) is moved according to a predetermined spatial and/or temporal motion pattern.

6. The method as claimed in one of the preceding claims, **characterized in that** the movement of the machine component (2) comprises multiple motion segments.

7. The method as claimed in one of the preceding claims, **characterized in that** the motion of the machine component (2) comprises motion segments having different velocities, different accelerations, and/or rest periods with different durations.

8. The method as claimed in one of the preceding claims, **characterized in that** the actual attachment position (8') of the vibration sensor (5) on the machine (1) is determined by the vibration sensor (5) itself or by the machine (1) from multiple possible attachment positions (8) based on the evaluated measurement signals (10).

9. The method as claimed in claim 8, **characterized in that** reference measurement values (14) or threshold values (17) are stored in the vibration sensor (5), and for determining the actual attachment position (8') of the vibration sensor (5), the measurement signals (10) of the vibration sensor (5) are compared to the stored reference measurement values (14) or to the threshold values (17).

10. The method as claimed in claim 8 or 9, **characterized in that** reference measurement values (14) are stored in the machine (1) for each of the multiple attachment positions (8), and that for determining the actual attachment position (8') of the vibration sensor (5), the measurement signals (10) of the vibration sensor (5), which are transmitted to the machine (1), are correlated with the stored reference measurement values (14).

11. Machine (1) comprising a communication interface (4) on the machine side, a wireless vibration sensor (5) having a communication interface (7) for forming a wireless communication link (9) with the communication interface (4) on the machine side, and a signal processing unit (11) which is programmed to determine access data about the communication interface (4) on the machine side from received measurement signals (10), a controllable movable machine component (2) which influences the measurement signal (10) of the vibration sensor (5), and a machine controller (3) which is programmed to move the machine component (2) relative to the vibration sensor (5) in an information-specific manner for wirelessly transmitting access data about the communication interface (4) on the machine side from the machine (1) to the vibration sensor (5).

12. Machine as claimed in claim 11, **characterized in that** reference measurement values (14) or threshold values (17) are stored in a data memory (16) of the vibration sensor (5), and the signal processing unit (11) is programmed to determine from multiple possible attachment positions (8) the actual attachment position (8') of the vibration sensor (5) on the machine (1) via a comparison of the received measurement signals (10) to the reference measurement values (14) or to the threshold values (17).

## Revendications

1. Procédé de transmission de données à un capteur de mesure (5) sans fil, fixé à la machine (1), sachant qu'en vue de la transmission sans fil de données au capteur de mesure (5), un composant (2) de ladite machine (1), influençant le signal de mesure (10) dudit capteur de mesure (5), est piloté en mode spécifiquement informatif et des signaux de mesure (10) spécifiquement informatifs s'en trouvent ainsi engendrés sur ledit capteur de mesure (5), et sachant que lesdits signaux de mesure (10) sont évalués en tant que données par le capteur de mesure (5) proprement dit,
**caractérisé par le fait**
**que** le capteur de mesure est un capteur de vibrations (5), et le composant (2) de la machine est un composant (2) de machine doué de mobilité, mû en mode spécifiquement informatif par rapport audit capteur de vibrations (5) ; et
par le fait que des données d'accès à un interface de communication (4) de la machine (1) sont transmises, sans fil, au capteur de vibrations (5) et les signaux de mesure (10) sont évalués en tant que données d'accès par le capteur de vibrations (5) proprement dit.

2. Procédé selon la revendication 1, **caractérisé par le fait que** le capteur de vibrations (5) se connecte sans fil, par les données d'accès (12) spécifiées, à l'interface de communication (4) de la machine (1).

3. Procédé selon l'une des revendications précédentes, **caractérisé par le fait que** les signaux de mesure (10) évalués forment un code Morse.

4. Procédé selon l'une des revendications précédentes, **caractérisé par le fait que** le composant (2) de la machine est mû en direction de chacun des multiples emplacements de fixation (8) possibles.

5. Procédé selon l'une des revendications précédentes, **caractérisé par le fait que** le composant (2) de la machine est mû suivant un modèle de mouvement spatial et/ou temporel prédéterminé.

6. Procédé selon l'une des revendications précédentes, **caractérisé par le fait que** le mouvement du composant (2) de la machine comporte plusieurs fractions de mouvement.

7. Procédé selon l'une des revendications précédentes, **caractérisé par le fait que** le mouvement du composant (2) de la machine comporte des fractions de mouvement présentant des vitesses différentes, des accélérations différentes et/ou des pauses différemment longues.

8. Procédé selon l'une des revendications précédentes, **caractérisé par le fait que** l'emplacement effectif (8') de fixation du capteur de vibrations (5), sur la machine (1), est spécifié par le capteur de vibrations (5) proprement dit, ou par ladite machine (1), sur la base des signaux de mesure (10) évalués provenant de plusieurs emplacements de fixation (8) possibles.

9. Procédé selon la revendication 8, **caractérisé par le fait que** des valeurs de mesure de référence (14) ou des valeurs de seuil (17) sont mémorisées dans le capteur de vibrations (5) ; et **par le fait que**, pour spécifier l'emplacement effectif (8') de fixation du capteur de vibrations (5), les signaux de mesure (10) dudit capteur de vibrations (5) sont comparés, respectivement, auxdites valeurs de mesure de référence (14) mémorisées, ou auxdites valeurs de seuil (17).

10. Procédé selon la revendication 8 ou 9, **caractérisé par le fait que** des valeurs de mesure de référence (14) sont mémorisées, dans la machine (1), pour chacun des multiples emplacements de fixation (8) ; et **par le fait que**, pour spécifier l'emplacement effectif (8') de fixation du capteur de vibrations (5), les signaux de mesure (10) dudit capteur de vibrations (5), transmis à la machine (1), sont mis en corrélation avec lesdites valeurs de mesure de référence (14) mémorisées.

11. Machine (1) comprenant un interface de communication (4) situé côté machine ; un capteur de vibrations (5) sans fil, muni d'un interface de communication (7) dédié à la connexion (9) de communication sans fil avec ledit interface de communication (4) situé côté machine, et d'une unité (11) de traitement de signaux qui est programmée pour spécifier, à partir de signaux de mesure (10) reçus, des données d'accès audit interface de communication (4) situé côté machine ; un composant (2) de machine doué de mobilité, apte au pilotage et influençant le signal de mesure (10) dudit capteur de vibrations (5) ; et une commande machine (3) qui est programmée pour mouvoir ledit composant (2) de machine par rapport au capteur de vibrations (5), en mode spécifiquement informatif, en vue de la transmission sans fil, de ladite machine (1) audit capteur de vibrations (5), de données d'accès audit interface de communication (4) situé côté machine.

12. Machine selon la revendication 11, **caractérisée par le fait que** des valeurs de mesure de référence (14) ou des valeurs de seuil (17) sont mémorisées dans une mémoire de données (16) du capteur de vibrations (5) ; et **par le fait que** l'unité (11) de traitement de signaux est programmée en vue de spécifier l'emplacement effectif (8') de fixation dudit capteur de vibrations (5), sur ladite machine (1), par une comparaison des signaux de mesure (10) reçus avec les valeurs de mesure de référence (14), respectivement avec les valeurs de seuil (17) émanant de plusieurs emplacements de fixation (8) possibles.
